Europäisches Patentamt

European Patent Office

Office européen des brevets

(11) Numéro de publication: **0 466 994 A1**

## DEMANDE DE BREVET EUROPEEN

(21) Numéro de dépôt: 90402078.1

(22) Date de dépôt: 18.07.90

(51) Int. Cl.⁵: **F16J 15/52**, F16J 3/04, F16K 41/10

(43) Date de publication de la demande:
**22.01.92 Bulletin 92/04**

(84) Etats contractants désignés:
**AT BE CH DE DK ES GB GR IT LI LU NL SE**

(71) Demandeur: **EG ET G**
**18ter, rue des Osiers Coignieres**
**F-78310 Maurepas (Yvelines)(FR)**

(72) Inventeur: **Merel, René**

**5 rue Grisard**
**F-92700 Colombes(FR)**
Inventeur: **Galard, Michel**
**71 Avenue Ferdinand Dreyfus**
**F-78120 Rambouillet(FR)**

(74) Mandataire: **Schrimpf, Robert et al**
**Cabinet Regimbeau 26, Avenue Kléber**
**F-75116 Paris(FR)**

(54) **Dispositif d'étanchéification destiné à réaliser une étanchéité entre deux organes disposant d'une possibilité de rotation relative d'amplitude limitée.**

(57) Pour réaliser une étanchéité entre deux organes (1, 2) disposant d'une possibilité de rotation relative d'amplitude limitée autour d'un axe déterminé (4), on utilise un soufflet (11) comportant deux tronçons tubulaires extrêmes (51, 52), rigides et solidarisés de façon étanche avec des zones respectives de l'un et l'autre desdits organes (1, 2), et un tronçon tubulaire (53) intermédiaire entre lesdits tronçons tubulaires extrêmes (51, 52) et susceptible de se déformer en torsion autour dudit axe (4), sur une amplitude au moins égale à ladite amplitude limitée.

On élimine ainsi tout risque de fuite entre les deux organes.

FIG.2

EP 0 466 994 A1

La présente invention concerne un dispositif d'étanchéification, destiné à réaliser une étanchéité entre deux organes disposant d'une possibilité de rotation relative d'amplitude limitée autour d'un axe déterminé et présentant des zones respectives annulaires entourant ledit axe et mutuellement décalées suivant celui-ci.

A titre d'exemple non limitatif de tels organes, on peut citer un corps de robinet à boisseau sphérique, présentant un alésage d'axe déterminé, et un arbre d'ouverture et de fermeture de ce robinet, engagé coaxialement dans cet alésage et susceptible d'une rotation sur un quart ou un tiers de tour par rapport au corps dans cet alésage.

Traditionnellement, pour étanchéifier mutuellement de tels organes, on utilise un presse-étoupe comportant au moins une garniture d'étanchéité solidaire d'un premier de ces organes, à savoir le corps de robinet dans l'exemple ci-dessus, et en contact glissant avec le second de ces organes, à savoir l'arbre de commande dans cet exemple, pour autoriser une rotation relative au niveau de ce contact.

De tels presse-étoupes sont sujets aux fuites au niveau du contact entre la garniture d'étanchéité et le second organe même si l'on applique à la garniture d'étanchéité une pression élevée de contact avec cet organe.

Le but de la présente invention est de remédier à cet inconvénient et à cet effet, la présente invention propose un dispositif d'étanchéification, destiné à réaliser une étanchéité entre deux organes disposant d'une possibilité de rotation relative d'amplitude limitée autour d'un axe déterminé et présentant des zones respectives annulaires entourant ledit axe et mutuellement décalées suivant celui-ci, tels qu'un corps présentant un alésage d'axe déterminé et un arbre engagé coaxialement dans ledit alésage, caractérisé en ce qu'il comporte un soufflet tubulaire étanche entourant sensiblement coaxialement ledit axe entre lesdites zones, et en ce que ledit soufflet comporte :

- deux tronçons tubulaires extrêmes, rigides et solidarisés de façon étanche respectivement avec l'une desdites zones et avec l'autre desdites zones, et
- un tronçon tubulaire intermédiaire entre lesdits tronçons tubulaires extrêmes, présentant deux extrémités solidaires respectivement de l'un desdits tronçons tubulaires extrêmes et de l'autre desdits tronçons tubulaires extrêmes et susceptible de se déformer en torsion par rotation relative desdites extrémités, autour dudit axe, sur une amplitude au moins égale à ladite amplitude limitée.

Le soufflet tubulaire lui-même est étanche et une étanchéification efficace de la liaison solidaire de chacun de ses tronçons extrêmes avec l'organe respectivement correspondant ne présente aucune difficulté, et peut par exemple résulter d'une soudure si les matériaux utilisés pour le soufflet et les deux organes entre lesquels il est destiné à assurer une étanchéité s'y prêtent, si bien que le dispositif selon l'invention assure efficacement une étanchéité même à l'encontre de pressions élevées.

Néanmoins, par l'aptitude de son tronçon intermédiaire à la déformation en torsion, le soufflet du dispositif d'étanchéification selon l'invention ne s'oppose pas à la rotation relative des deux organes entre lesquels il assure l'étanchéification, compte tenu de l'amplitude limitée de cette rotation.

A cet effet, on peut envisager plusieurs modes de réalisation du soufflet dans son tronçon intermédiaire. Selon un mode de mise en oeuvre préféré de la présente invention, se prêtant particulièrement bien à une réalisation du soufflet en métal ou alliage métallique, tel qu'un acier à hautes caractéristiques mécaniques et à durcissement structural, permettant d'obtenir à la fois une bonne résistance à la pression et une bonne résistance au feu, au moins le tronçon intermédiaire du soufflet est constitué par une paroi tubulaire présentant une forme générale de révolution autour de l'axe de rotation relative des deux organes, et, au moins dans un premier tronçon axialement localisé dudit tronçon intermédiaire, et éventuellement sur la totalité de ce tronçon intermédiaire, ladite paroi est ondulée suivant au moins une hélice présentant comme axe ledit axe, de façon à être déformable en torsion autour de cet dernier. Naturellement, la longueur, le pas et l'angle de l'hélice, ainsi que ses diamètres intérieur et extérieur sont choisis en fonction de l'amplitude maximale de rotation relative entre les deux organes, de même que l'épaisseur de la paroi et le matériau constitutif de celle-ci, qui sont également choisis en fonction des conditions de température et de pression auxquelles doit résister le soufflet. Pour diminuer la raideur de celui-ci, c'est-à-dire pour opposer un minimum d'entrave à la rotation relative des deux organes, on peut prévoir que ladite paroi soit ondulée suivant une pluralité d'hélices mutuellement imbriquées de même axe, de même sens et de même pas. Egalement à cet effet, on peut prévoir que, dans au moins un second tronçon axialement localisé dudit tronçon intermédiaire du soufflet, ladite paroi soit ondulée suivant au moins un anneau de révolution autour dudit axe, de façon à être déformable suivant cet axe ; par exemple, si le premier tronçon ondulé en hélice est unique, on peut prévoir deux de ces seconds tronçons, dont chacun est alors interposé entre le premier tronçon du tronçon intermédiaire du soufflet et chacun des deux tronçons extrêmes de celui-ci, respectivement ; on peut également prévoir qu'un seul second tronçon de ce type, c'est-à-dire dont la paroi est ondulée suivant au moins un anneau de révolution autour de l'axe, soit intercalé entre deux premiers tronçons dont la paroi est ondulée en hélice, eux-mêmes raccordés aux tronçons extrêmes du soufflet soit directement, soit également par l'intermédiaire de seconds tronçons respectifs, dont la paroi est ondulée suivant au moins un anneau de révolution autour de l'axe.

De préférence, le soufflet est réalisé en une seule pièce mais, notamment dans le cas où l'amplitude maximale de rotation relative entre les deux organes nécessite une grande longueur de ce soufflet suivant l'axe, ce soufflet peut également être réalisé par assemblage mutuel solidaire de plusieurs tronçons tubulaires, par exemple assemblés mutuellement par soudure si le matériau constitutif de ces différents tronçons s'y prête.

Le soufflet ainsi conçu peut être laissé libre de se déformer, lors de la rotation relative des deux organes, entre ses deux tronçons extrêmes mais on peut également prévoir de le guider par l'extérieur de façon à éviter une trop grande déformation par flambage lors de son enroulement en torsion, consécutif à cette rotation relative.

A cet effet, on prévoit des moyens de guidage coaxial de la paroi du tronçon intermédiaire du soufflet, lesquels moyens de guidage coaxial comportent par exemple un fourreau tubulaire rigide entourant coaxialement ladite paroi en délimitant autour de celle-ci un jeu annulaire de révolution autour dudit axe, au moins un patin annulaire de révolution autour dudit axe, interposé entre ladite paroi et ledit fourreau et en contact glissant avec ledit fourreau, et des moyens de retenue dudit patin à l'encontre d'un déplacement suivant ledit axe par rapport à ladite paroi ; de façon particulièrement simple, ces moyens de retenue peuvent comporter au moins une gorge annulaire de révolution autour dudit axe, aménagée dans ladite paroi en regard du fourreau, et au moins trois pattes équi-réparties autour dudit axe et portées solidairement par ledit patin, lesdites pattes étant emboîtées dans ladite gorge ; de préférence, le fourreau tubulaire est solidaire de l'un desdits organes.

D'autres caractéristiques et avantages d'un dispositif d'étanchéification selon l'invention ressortiront de la description ci-dessous, relative à deux exemples non limitatifs de réalisation, ainsi que des dessins annexés qui font partie intégrante de cette description.

- La figure 1 montre une vue d'un soufflet de dispositif d'étanchéification selon l'invention, en élévation latérale.
- La figure 2 montre une vue de l'application de ce soufflet à la réalisation d'une étanchéité entre un corps de robinet à boisseau sphérique et un arbre de commande de l'ouverture et de la fermeture de ce robinet, en demi-coupe par un plan incluant l'axe commun de l'arbre de commande et de l'alésage le recevant à la rotation relative dans le corps.
- La figure 3 illustre un détail d'une variante de réalisation du soufflet illustré aux figures 1 et 2, pour moitié, en partie en élévation latérale et en partie en coupe par un plan incluant l'axe commun de l'arbre de commande et de l'alésage de réception de ce dernier dans le corps.

Naturellement, bien que le soufflet caractéristique du dispositif d'étanchéification selon l'invention soit décrit dans une application à l'étanchéification relative d'un corps de robinet à boisseau sphérique et d'un arbre de commande de l'ouverture et de la fermeture de ce robinet, un Homme du métier comprendra aisément qu'un tel soufflet est susceptible d'autres applications sans que l'on sorte pour autant du cadre de la présente invention.

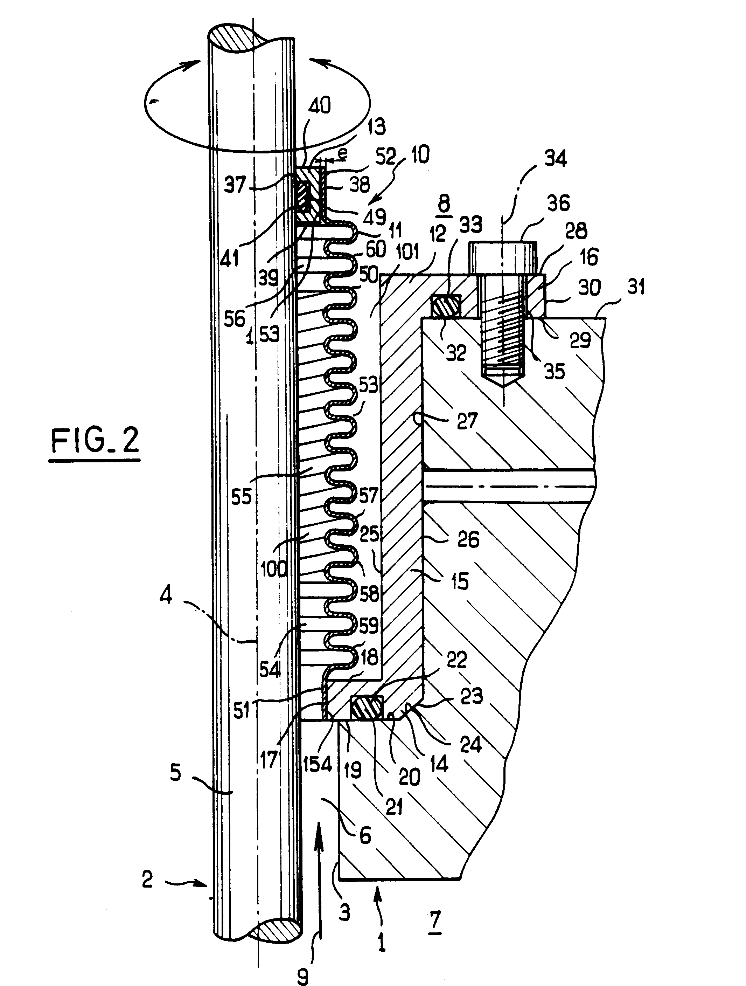

On se réfèrera en premier lieu à la figure 2, où l'on a désigné par 1 le corps de robinet, par 2 l'arbre de commande d'ouverture et de fermeture de ce robinet, lequel arbre 2 traverse une paroi du corps 1 par un alésage 3 présentant une forme cylindrique de révolution autour d'un axe 4 autour duquel l'arbre 2 est délimité par une face périphérique extérieure 5 cylindrique de révolution autour de cet axe ; par tout moyen approprié, connu en lui-même et non représenté, l'arbre 2 est guidé à la rotation autour de l'axe 4, à l'intérieur de l'alésage 3, par rapport au corps 1 sans autre possibilité de déplacement relatif et l'amplitude de cette rotation est limitée par exemple à un quart de tour ou un tiers de tour, ce qui correspond à un passage de la position d'ouverture du robinet à la position de fermeture de celui-ci et inversement ; naturellement, ces chiffres sont indiqués à titre d'exemple non limitatif, étant entendu qu'un dispositif d'étanchéification selon l'invention trouvera de façon générale son application dès lors que les organes entre lesquels il doit assurer une étanchéité ne sont pas susceptibles de tourner indéfiniment l'un par rapport à l'autre, c'est-à-dire que leur rotation relative est limitée à un maximum de quelques tours, et de préférence de moins d'un tour, dans un sens et dans l'autre.

Entre la face périphérique extérieure 5 de l'arbre 2 et l'alésage 3 du corps 1 subsiste un jeu annulaire continu 6, de révolution autour de l'axe 4 et par l'intermédiaire duquel le fluide sous pression dont, suivant qu'il est ouvert ou fermé, le robinet doit permettre ou interdire le passage, tend à passer de l'intérieur 7 du robinet vers l'extérieur 8 de celui-ci, comme on l'a schématisé à la figure 2 par une flèche 9 parallèle à l'axe 4.

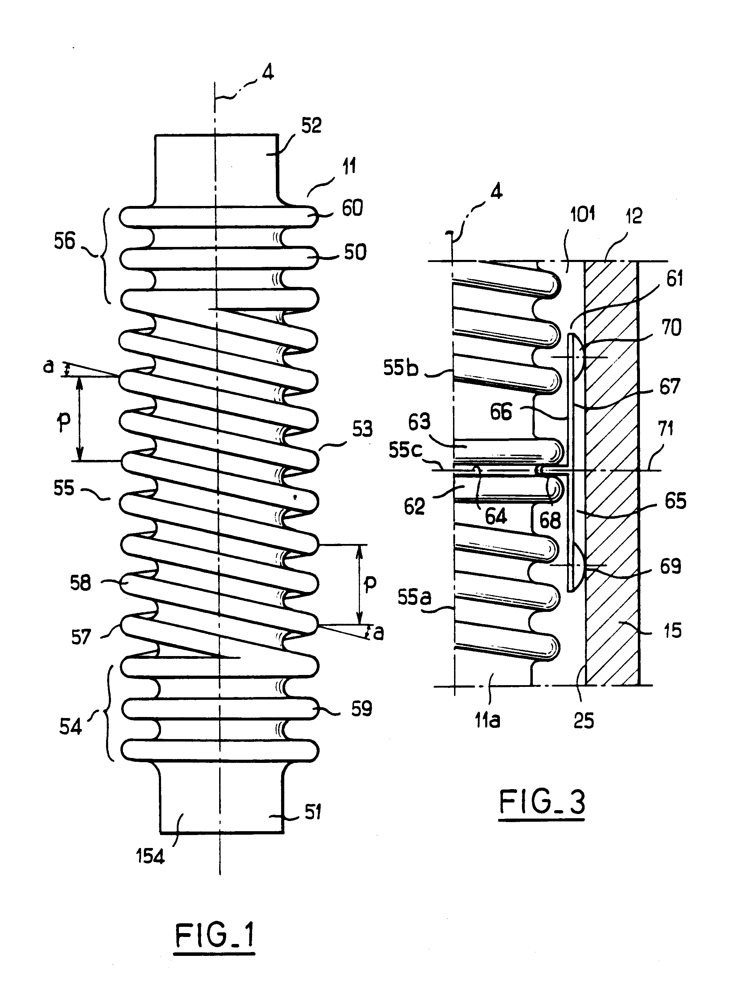

A ce passage s'oppose le dispositif d'étanchéification 10 selon l'invention, qui va être décrit à présent en référence aux figures 1 et 2.

Dans l'exemple non limitatif de mise en oeuvre de l'invention illustré sur ces figures, le dispositif selon l'invention 10 est formé de l'assemblage étanche de trois pièces principales elles-mêmes étanches, à savoir le soufflet déformable 11 et deux pièces intermédiaires rigides 12, 13 servant à son montage étanche et rigide respectivement sur le corps 1 et sur l'arbre 2 et présentant à cet effet des formes générales respectives de révolution autour de l'axe 4.

A cet effet, la pièce intermédiaire de montage 12 présente trois zones 14, 15, 16 qui se succèdent dans cet ordre dans le sens de la flèche 9 et vont être décrites à présent. La zone 14 présente la forme d'une collerette perpendiculaire à l'axe 4 vers lequel elle est délimitée par une face 17 cylindrique de révolution autour de cet axe avec un diamètre intermédiaire entre les diamètres respectifs de la face périphérique extérieure 5 de l'arbre 2 et de l'alésage 3 du corps 1 ; respectivement dans le sens de la flèche 9 et en sens inverse, la zone 14 est délimitée par deux faces annulaires planes 18, 19 perpendiculaires à l'axe 4 et se raccordant à la face 17 dans le sens d'un rapprochement vis-à-vis de cet axe 4 ; alors que la face 18, comme il ressortira de la suite de la description, est totalement dégagée vers l'extérieur 8 du corps de robinet 1 et par conséquent soumise à la pression ambiante, la face 19 est exposée à la pression régnant à l'intérieur 7 du corps 1 dans une zone annulaire, intermédiaire entre la face 17 de la zone 14 et l'alésage 3, et par ailleurs placée en contact intime avec une face annulaire plane 20, de révolution autour de l'axe 4 et tournée dans le sens de la flèche 9, qui est prévue sur le corps 1 tout autour de l'alésage 3 ; la face 19 est étanchéifiée vis-à-vis de la face 20 par tout moyen approprié, tenant compte d'une fixité relative de ces deux faces lorsque le dispositif selon l'invention est en service, à savoir dans l'exemple non limitatif illustré par un joint torique 21 engagé dans une gorge annulaire 22 de la face 19. Dans le sens d'un éloignement par rapport à l'axe 4, les faces 18 et 19 se raccordent, respectivement directement et par l'intermédiaire d'une face tronconique 23 qui converge en sens inverse du sens de la flèche 9 et est placée au contact d'une face tronconique complémentaire 24 du corps 1, à des faces respectives 25 et 26 de la zone 15 de la pièce 12, lesquelles faces 25 et 26 sont cylindriques de révolution autour de l'axe 4 et tournées respectivement vers celui-ci et dans le sens d'un éloignement par rapport à celui-ci ; la zone 15 présente ainsi la forme d'un fourreau parallèle à l'axe 4, entourant ce dernier et par rapport auquel la zone 14 forme une saillie annulaire vers cet axe 4 ; la face 26 est placée au contact d'une face complémentaire 27 du corps de robinet 1 alors que, comme il ressortira de la suite de la description, la face 25 est exposée à la pression ambiante, à l'extérieur 8 du corps 1. Dans le sens de la flèche 9, à l'opposé de leur raccordement avec les faces respectivement correspondantes de la zone 14, les faces 25 et 26 de la zone 15 de la pièce 12 se raccordent à des faces respectives 28, 29 de la zone 16, lesquelles sont annulaires, planes, perpendiculaires à l'axe 4 et tournées respectivement dans le sens de la flèche 9 et en sens inverse ; la zone 16 présente ainsi, entre les faces 28 et 29, la forme d'une collerette annulaire en saillie par rapport à la zone 15 dans le sens d'un éloignement par rapport à l'axe 4, sens dans lequel elle est délimitée par une face 30 cylindrique ; les faces 28 et 30 sont exposées à la pression ambiante, à l'extérieur 8 du corps de robinet 1, alors que la face 29 est appliquée contre une face 31 de ce corps 1, laquelle face est plane, perpendiculaire à l'axe 4 et tournée dans le sens de la flèche 9 et borde la face 27 à l'opposé du raccordement de cette dernière avec la face 24 ; une étanchéité est assurée entre les faces 29 et 31 par tout moyen approprié, et par exemple par un joint torique 32 logé dans une gorge annulaire 33 creusée dans la face 29 ; entre cette gorge annulaire 33 et la face 30, la zone 16 de la pièce 12 est percée, suivant des axes respectifs 34 parallèles à l'axe 4, de plusieurs alésages 35 par lesquels des boulons 36 vissés dans le corps 1 traversent de part en part la zone 16 pour solidariser la pièce 12 avec le corps 1 et mettre en compression les joints toriques 21 et 32 respectivement contre les faces 20 et 31.

La pièce 13, décalée dans le sens de la flèche 9 par rapport à la zone 14 de la pièce 12, présente quant à elle la forme d'une bague annulaire délimitée respectivement vers l'axe 4 et dans le sens d'un éloignement par rapport à celui-ci, par une face cylindrique 37 présentant sensiblement le même diamètre que la face périphérique extérieure 5 de l'arbre 2, et par une face cylindrique 38 présentant un diamètre intermédiaire entre celui des faces 5 et 17, et plus précisément un diamètre égal à celui de la face 17 réduit d'une valeur e qui, comme il apparaîtra plus loin, correspond à une épaisseur de paroi du soufflet 11 ; les deux faces 37 et 38 sont raccordées mutuellement par des faces annulaires planes 39, 40, perpendiculaires à l'axe 4 et dont la première, tournée en sens inverse du sens 9, est exposée à la pression régnant à l'intérieur 7 du corps 1 de robinet alors que la seconde, tournée dans le sens de la flèche 9, est exposée à la pression régnant à l'extérieur 8 de ce corps 1 ; par sa face 37, la pièce 13 est solidarisée de façon étanche avec l'arbre 2, par exemple par emmanchement serré et emprisonnement d'un joint torique 41 logé dans une gorge annulaire 49 creusée dans la face 37, ou encore par soudure.

Un Homme du métier comprendra aisément que les modes de solidarisation, avec étanchéité, entre les pièces 12 et 13 et, respectivement, le corps 1 du robinet et l'arbre 2 de commande d'ouverture et de fermeture de ce robinet qui viennent d'être décrits ne constituent que des exemples non limitatifs ; d'autres moyens pourront être choisis à cet effet sans que l'on sorte pour autant du cadre de la présente invention ; de même, un Homme du métier comprendra aisément que l'on pourra se dispenser de pièce intermédiaire de montage entre le soufflet 11 et les deux organes tels que le corps de robinet 1 et l'arbre de commande 2 entre lesquels il est destiné à réaliser une étanchéité, chaque fois que cela sera compatible avec la forme et les matériaux constitutifs du corps 1 et de l'arbre 2, d'une part, et avec les impératifs de montage et de démontage lors de la fabrication du robinet de sa maintenance, d'autre part.

En vue d'étanchéifier l'intérieur 7 du corps de robinet 1 vis-à-vis de l'extérieur 8 de ce corps, la zone 14 en forme de collerette de la pièce intermédiaire de montage 12 et la pièce intermédiaire de montage 13, ou encore des zones respectives du corps de robinet 1 et de l'arbre de commande 2 mutuellement décalées en référence à l'axe 4 comme le sont cette zone 14 et cette pièce 13, sont raccordées mutuellement, de façon étanche, par le soufflet déformable 11 qui est constitué par une paroi tubulaire étanche 50 entourant sensiblement coaxialement l'arbre 2 notamment à l'intérieur de la zone 15 en forme de fourreau de la pièce intermédiaire de montage 12, avec une forme générale de révolution autour de l'axe 4, et solidarisée de façon étanche respectivement avec la face 17 de la zone 14 en forme de collerette et avec la face 38 de la pièce intermédiaire de montage 13, par exemple par soudure étanche, comme le montre la figure 2.

Comme le montrent les figures 1 et 2, la paroi 50 du soufflet 11 présente à cet effet deux tronçons extrêmes 51, 52 délimités respectivement vers l'axe 4 et dans le sens d'un éloignement par rapport à celui-ci par des faces 153, 154 cylindriques de révolution autour de l'axe 4 avec des diamètres sensiblement identiques respectivement à celui de la face 38 de la pièce intermédiaire de montage 13 et à celui de la face 17 de la zone 14 de la pièce intermédiaire de montage 12, pour s'appliquer étroitement respectivement contre cette face 38 et contre cette face 17 et faciliter ainsi une solidarisation mutuelle étanche, par exemple par soudure.

Les tronçons extrêmes 51, 52 de la paroi 50 du soufflet 11 sont rigides soit de façon inhérente, soit du fait de leur solidarisation avec la zone 14 de la pièce rigide 12 et avec la pièce rigide 13, respectivement.

Entre les tronçons extrêmes 51 et 52, et sur la majeure partie de sa longueur mesurée parallèlement à l'axe 4, le soufflet 11 présente un tronçon intermédiaire 53 qui, lui-même, comprend trois tronçons 54, 55, 56 se succédant dans cet ordre dans le sens de la flèche 9, du tronçon extrême 51 auquel le tronçon 54 raccorde le tronçon 55 à l'une des extrémités du tronçon intermédiaire 53, au tronçon extrême 52 auquel le tronçon 56 raccorde le tronçon 55 à l'autre extrémité du tronçon intermédiaire 53.

Dans le tronçon 55, qui présente lui-même parallèlement à l'axe 4 une longueur correspondant à la majeure partie de la longueur du soufflet 11 mesurée de son tronçon extrême 51 à son tronçon extrême 52 parallèlement à l'axe 4, la paroi 50 est ondulée suivant deux hélices 57, 58 d'axe 4, mutuellement imbriquées ; à cet effet, les deux hélices 57 et 58 présentent le même pas p, le même sens et le même angle a, et chaque spire de l'une est placée à mi-distance de deux spires consécutives de l'autre ; toutefois, on ne sortirait pas du cadre de la présente invention en prévoyant une seule hélice, ou plus de deux hélices mutuellement imbriquées, de même pas, de même sens et de même angle, dans le tronçon 55 du tronçon intermédiaire 53 du soufflet ; lorsque plusieurs hélices mutuellement imbriquées sont prévues, ces hélices peuvent être mutuellement identiques, comme c est le cas dans l'exemple illustré, ou encore différentes dès lors qu'elles présentent le même pas, le même sens et le même angle.

Le caractère ondulé, en hélice, de la paroi 50 dans le tronçon 55 facilite une déformation de ce tronçon 55 à la torsion, autour de l'axe 4, afin d'autoriser une rotation relative, autour de cet axe, des deux tronçons extrêmes 51 et 52 et, avec eux, des pièces intermédiaires de montage 12 et 13, sans détérioration de la paroi 50, avec une amplitude certes limitée, mais en tout cas au moins égale à l'amplitude maximale dont l'arbre de commande 2 doit tourner autour de l'axe 4 par rapport au corps 1 lors du passage de la position d'ouverture du robinet à la position de fermeture de celui-ci, et réciproquement.

Les caractéristiques dimensionnelles du tronçon 55 sont choisies notamment en fonction de cette amplitude.

On remarquera que, selon un mode de mise en oeuvre plus simple, et non représenté, de la présente invention, le tronçon 55 dans lequel la paroi 50 est ondulée en hélice pourrait s'étendre de l'un à l'autre des tronçons d'extrémité 51 et 52 ; toutefois, compte tenu de ce que les tronçons extrêmes 51 et 52 ne peuvent se déplacer l'un par rapport à l'autre suivant l'axe 4, ceci impose à ce tronçon 55 de travailler à la fois en torsion autour de l'axe 4 et en traction-compression parallèlement à cet axe, lors de la rotation relative des deux tronçons extrêmes 51 et 52.

Dans le cas du mode de mise en oeuvre de l'invention qui a été illustré, par contre, on dissocie le travail en torsion, qui s'effectue essentiellement au niveau du tronçon 55, du travail en traction-compression qui s'effectue quant à lui essentiellement au niveau des tronçons 54 et 56 du tronçon intermédiaire 53 du soufflet 11.

A cet effet, au niveau de chacun des deux tronçons 54 et 56, qui sont identiques dans l'exemple illustré, la paroi 50 est ondulée non pas en hélice comme au niveau du tronçon 55, mais suivant au moins un anneau 59, 60 de révolution autour de l'axe 4 ; dans l'exemple illustré, chacun des deux tronçons 54 et 56 présente ainsi trois anneaux d'ondulation respectifs 59, 60 ; naturellement, on ne sortirait pas du cadre de la présente invention en prévoyant un nombre différent d'anneaux au niveau de chacun des tronçons 54 et 56, ou encore en disposant différemment, dans le tronçon intermédiaire 53 du soufflet, un ou plusieurs tronçons plus particulièrement destinés à se déformer suivant l'axe 4, et par exemple ondulés suivant au moins un anneau de révolution autour de cet axe comme le sont les tronçons 54 et 56 du mode de réalisation décrit ; par exemple, la paroi 50 pourrait être ondulée en hélice en deux tronçons directement adjacents respectivement à l'un et l'autre des tronçons extrêmes 51 et 52, et entre lesquels serait interposé un tronçon dans lequel la paroi 50 serait ondulée suivant un ou plusieurs anneaux de révolution autour de l'axe 4.

De façon générale, la forme du soufflet 11 qui vient d'être décrite ne constitue qu'un exemple non limitatif par rapport auquel on pourra prévoir de nombreuses variantes ne sortant pas du cadre de la présente invention, notamment quant à la conformation de sa paroi 50 dans son tronçon intermédiaire 53, afin de permettre la rotation relative, d'amplitude limitée, de ses tronçons extrêmes 51 et 52.

On remarquera que pour conserver sa liberté de déformation lors de cette rotation relative, le soufflet 11, notamment lorsqu'il est au repos, c'est-à-dire tel qu'il est illustré aux figures 1 et 2 dans l'une des positions relatives de l'arbre 2 et du corps 1, n'est en contact par aucune des ondulations de son tronçon intermédiaire 53 avec la face 5 de l'arbre 2 ou avec la face 25 de la zone en forme de fourreau 15 de la pièce intermédiaire de montage 12 ; en d'autres termes, un jeu annulaire continu 100, de forme générale de révolution autour de l'axe 4, subsiste entre la face 5 de l'arbre 4 et le soufflet 11, du tronçon extrême 154 de celui-ci par lequel ce jeu communique avec l'intérieur 7 du corps 1 à la pièce intermédiaire de montage 13 qui, avec le soufflet 11, isole ce jeu 100 de l'extérieur 8, et un jeu annulaire continu 101, de forme générale de révolution autour de l'axe 4, subsiste entre le soufflet 11 et la face 25 de la zone en forme de fourreau 15 et communique avec l'extérieur 8 du corps 1 en étant isolé de l'intérieur 7 de celui-ci par le soufflet 11 et la zone 14 en forme de collerette de la pièce intermédiaire de montage 12.

En outre, dans les applications où il y a risque de flambage du soufflet 11, et par conséquent risque de venue de ce dernier en contact avec la face 5 de l'arbre 2 ou avec la face 25 de la zone en forme de fourreau 15 de la pièce intermédiaire de montage 12, au risque d'entraîner des détériorations de la paroi 50, on peut prévoir des moyens de guidage coaxial du tronçon intermédiaire 53, de préférence à l'extérieur 8 du corps de robinet et plus précisément dans le jeu 101 subsistant entre le soufflet 11 et la face 25 de la zone en forme de fourreau 15 de la pièce intermédiaire de montage 12.

De tels moyens de guidage ont été illustrés en 61 à la figure 3, où l'on retrouve par ailleurs à l'identique la zone en forme de fourreau 15 de la pièce intermédiaire de montage 12, avec notamment sa face 25 tournée vers l'axe 4, et un fourreau 11a identique au fourreau 11 si ce n'est que le tronçon 55 unique est remplacé par deux tronçons 55a et 55b en tout point analogue au tronçon 55 notamment quant à l'ondulation de la paroi du soufflet en hélice ; les deux tronçons 55a et 55b présentent approxitivement la même longueur suivant l'axe 4 et sont adjacents respectivement au tronçon 54 et au tronçon 56 (non représentés) ; ils sont raccordés deux à deux par un tronçon 55c dans lequel la paroi du soufflet 11a forme, par ondulation, deux bourrelets 62 et 63 annulaires de révolution autour de l'axe 4 et en saillie dans le sens d'un éloignement par rapport à l'axe 4 pour délimiter entre eux, à l'extérieur du soufflet, une gorge 64 également annulaire de révolution autour de cet axe 4 ; on remarquera que les deux saillies 62 et 63 respectent le jeu précité 101 vis-à-vis de la face 25 de la zone en forme de fourreau 15 de la pièce intermédiaire de montage 12.

La gorge 64 et les deux ondulations annulaires 62 et 63 constituent des moyens de retenue, à l'encontre d'un déplacement parallèlement à l'axe 4, par rapport au soufflet 11a, d'une pièce 65 constituant au moins un patin annulaire de révolution autour de l'axe 4, disposée à l'intérieur du jeu annulaire 101 et venant en contact glissant avec la face 25 de la zone en forme de fourreau 15 de la pièce intermédiaire de montage 12. A cet effet, la pièce 65, de forme générale de révolution autour de l'axe 4, présente vers ce dernier ainsi que dans le sens d'un éloignement par rapport à ce dernier deux faces cylindriques 66 et 67, de diamètres respectifs intermédiaires entre le diamètre extérieur maximal des ondulations annulaires 62 et 63 ainsi que des ondulations en hélice des tronçons 55a et 55b et le diamètre de la face 25, avec des dimensions, parallèlement à l'axe 4, sensiblement inférieures aux dimensions correspondantes de la face 25 de telle sorte que la pièce 65 ne puisse ni venir au contact de la face 18 de la zone en forme de collerette 14 de la pièce intermédiaire de montage 12, ni sortir du jeu 101 vers l'extérieur 8 du corps 1 dans les conditions normales d'utilisation du robinet, c'est-à-dire de déformation du soufflet 11a. Suivant un même plan 71 perpendiculaire à l'axe 4 et constituant pour l'ensemble de la pièce 65 un plan de symétrie, cette pièce 65 porte de façon solidaire, en saillie radiale vers l'axe 4, trois pattes de retenue 68 emboîtées dans la gorge 64, entre les ondulations annulaires 62 et 63 qui coopèrent ainsi avec ces pattes 68 pour retenir la pièce 65 à l'encontre de tout déplacement parallèlement à l'axe 4 par rapport au soufflet 11a ; ces pattes de retenue 68 sont solidaires de la pièce 65. Par ailleurs, en saillie sur sa face 67 vers la face 25 de la zone en forme de fourreau 15 de la pièce intermédiaire de montage 12, dans des positions mutuellement symétriques par rapport au plan 71, la pièce formant patin 65 porte de façon solidaire deux patins 69 et 70 annulaires de révolution autour de l'axe 4, et placés en contact glissant avec la face 25. Pour des raisons de montage, la pièce formant patin 65 peut se présenter par exemple sous la forme d'un anneau élastique ouvert par une fente parallèle à l'axe 4, d'autres modes de réalisation de la pièce formant patin 65 pouvant également être prévus sans que l'on sorte pour autant du cadre de la présente invention ; de même, de telles pièces peuvent être multipliées, en cas de besoin, sur la longueur du tronçon intermédiaire 53 du fourreau 11 parallèlement à l'axe 4.

Naturellement, qu'il présente l'une des deux conformations décrites précédemment ou d'autres conformations, le fourreau caractéristique du dispositif d'étanchéification selon l'invention peut être réalisé en des matériaux très divers, par les procédés appropriés à ces matériaux, choisis en fonction notamment de la température à laquelle il doit être soumis en service, ainsi que de la différence de pression entre l'intérieur 7 et l'extérieur 8 à laquelle il doit être appelé à résister.

On peut notamment envisager la réalisation d'un soufflet selon l'invention par moulage d'une matière plastique ou analogue.

Cependant, on peut également envisager l'utilisation, pour la réalisation de ce soufflet, de matériaux a priori beaucoup plus rigides dont les ondulations de son tronçon intermédiaire 53 autorisent néanmoins la déformation, notamment en torsion selon une amplitude limitée, comme par exemple des métaux ou alliages métalliques et notamment des aciers à hautes caractéristiques mécaniques et à durcissement structural obtenu par traitement thermique, sous-vide de préférence afin d'éviter une oxydation.

Par exemple, dans un tel cas, le soufflet peut être réalisé a partir d'un tube que l'on forme hydrauliquement ou par emboutissage au moyen d'un mandrin de caoutchouc, dans une matrice formée de deux moitiés assemblées.

De préférence, le soufflet est réalisé en une seule pièce mais il peut également être réalisé par assemblage mutuel étanche de plusieurs tronçons, correspondant ou non aux tronçons précités 51, 52, 53, 54, 55, 56, 55a, 55b, 55c ; dans un tel cas, lorsque le soufflet est réalisé en métal ou en alliage métallique, on peut conformer chacun des tronçons du soufflet par formage d'un tube dans une matrice formée de deux moitiés assemblées, comme on l'a dit plus haut, puis souder ces différents tronçons dont on libère ensuite les contraintes par un traitement tel qu'une hypertrempe avant de pratiquer le traitement thermique de durcissement structural.

Naturellement, le choix des matériaux utilisés en vue de la réalisation du soufflet d'un dispositif d'étanchéification ainsi que le choix de la forme et des caractéristiques dimensionnelles de ce soufflet ressortent des aptitudes normales d'un Homme du métier, prenant en compte les conditions de température et de pression dans lesquelles doit évoluer le soufflet, la nature des fluides qu'il doit isoler mutuellement de façon étanche, et l'amplitude limitée de rotation relative des organes tels que le corps de robinet 1 et la tige de commande 2 entre lesquels il doit assurer une étanchéité.

**Revendications**

1. Dispositif d'étanchéification, destiné à réaliser une étanchéité entre deux organes (1, 2) disposant d'une possibilité de rotation relative d'amplitude limitée autour d'un axe déterminé (4) et présentant des zones respectives (13, 14) annulaires entourant ledit axe (4) et mutuellement décalées suivant celui-ci, tels qu'un corps (1) présentant un alésage (3) d'axe (4) déterminé et un arbre (2) engagé coaxialement dans ledit alésage (3), caractérisé en ce qu'il comporte un soufflet tubulaire étanche (11, 11a) entourant sensiblement coaxialement ledit axe (4) entre lesdites zones (13, 14), et en ce que ledit soufflet (11, 11a) comporte :

   - deux tronçons tubulaires extrêmes (51, 52), rigides et solidarisées de façon étanche respectivement avec l'une (14) desdites zones et avec l'autre (13) desdites zones, et

   - un tronçon tubulaire (53, 53a, 53b, 53c) intermédiaire entre lesdits tronçons tubulaires extrêmes (51, 52), présentant deux extrémités solidaires respectivement de l'un (51) desdits tronçons tubulaires extrêmes et de l'autre (52) desdits tronçons tubulaires extrêmes et susceptible de se déformer en torsion par rotation relative desdites extrémités, autour dudit axe (4), sur une amplitude au moins égale à ladite amplitude limitée.

2. Dispositif selon la revendication 1, caractérisé en ce qu'au moins ledit tronçon intermédiaire (53, 53a, 53b, 53c) du soufflet est constitué par une paroi tubulaire (50) présentant une forme générale de révolution autour dudit axe (4).

3. Dispositif selon la revendication 2, caractérisé en ce que, au moins dans au moins un premier tronçon (55, 55a, 55b) axialement localisé dudit tronçon intermédiaire (53, 53a, 53b, 53c) du soufflet (11, 11a), ladite paroi est ondulée suivant au moins une hélice (57, 58) présentant comme axe ledit axe (4), de façon à être déformable en torsion autour dudit axe (4).

4. Dispositif selon l'une quelconque des revendications 2 et 3, caractérisé en ce que, au moins dans ledit premier tronçon (55, 55a, 55b) axialement localisé, ladite paroi (50) est ondulée suivant une pluralité d'hélices (57, 58) mutuellement imbriquées de même axe (4), de même sens et de même pas (p).

5. Dispositif selon l'une quelconque des revendications 3 et 4, caractérisé en ce que, dans au moins un second tronçon (54, 56) axialement localisé dudit tronçon intermédiaire (53, 53a, 53b, 53c) du soufflet (11, 11a), ladite paroi (50) est ondulée suivant au moins un anneau (59, 60) de révolution autour dudit axe (4), de façon à être déformable suivant ledit axe (4).

6. Dispositif selon l'une quelconque des revendications 2 à 5, caractérisé en ce qu'il comporte des moyens (61, 15) de guidage coaxial de ladite paroi (50).

7. Dispositif selon la revendication 6, caractérisé en ce que les moyens (61, 15) de guidage coaxial de ladite paroi (50) comportent un fourreau tubulaire rigide (15) entourant coaxialement ladite paroi (15) en délimitant autour de celle-ci un jeu annulaire (101) de révolution autour dudit axe (4), au moins un patin (69, 70) annulaire de révolution autour dudit axe (4), interposé entre ladite paroi (50) et ledit fourreau (15) et en contact glissant avec ledit fourreau (15), et des moyens (62, 63, 64, 68) de retenue dudit patin (69, 70) à l'encontre d'un déplacement suivant ledit axe (4) par rapport à ladite paroi (50).

8. Dispositif selon la revendication 7, caractérisé en ce que lesdits moyens de retenue (62, 63, 64, 68) comportent au moins une gorge annulaire (64) de révolution autour dudit axe (4), aménagée dans ladite paroi (50) en regard du fourreau (15), et au moins trois pattes (68) équi-réparties autour dudit axe (4) et portées solidairement par ledit patin (69, 70), lesdites pattes (68) étant emboîtées dans ladite gorge (64).

9. Dispositif selon l'une quelconque des revendications 7 et 8, caractérisé en ce que ledit fourreau tubulaire (15) est solidaire de l'un (1) desdits organes (1, 2).

10. Dispositif selon l'une quelconque des revendications 1 à 9, caractérisé en ce que lesdites zones annulaires (13, 14) desdits organes (1, 2) et les tronçons tubulaires extrêmes (51, 52) du soufflet (11, 11a) présentent des formes de révolution autour dudit axe (4).

11. Dispositif selon l'une quelconque des revendications 1 à 10, caractérisé en ce que le soufflet (11, 11a) est réalisé en une seule pièce.

12. Dispositif selon l'une quelconque des revendications 1 à 10, caractérisé en ce que le soufflet (11, 11a) est formé d'un asemblage mutuel solidaire de plusieurs tronçons tubulaires.

13. Dispositif selon la revendication 12, caractérisé en ce que lesdits tronçons tubulaires sont assemblés mutuellement par soudure.

14. Dispositif selon l'une quelconque des revendications 1 à 13, caractérisé en ce que les tronçons tubulaires extrêmes (51, 52) du soufflet (11, 11a) sont solidarisés avec lesdites zones annulaires (13, 14) desdits organes (1, 2) par soudure.

15. Dispositif selon l'une quelconque des revendications 1 à 14, caractérisé en ce que le soufflet (11, 11a) est métallique.

16. Dispositif selon la revendication 15, caractérisé en ce que le soufflet (11, 11a) est en acier à hautes caractéristiques mécaniques et à durcissement structural.

FIG_1

FIG_3

FIG. 2

**Office européen des brevets**

**RAPPORT DE RECHERCHE EUROPEENNE**

Numéro de la demande

**EP 90 40 2078**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 415 005 (HELLER) <br> * le document en entier * <br> – – – | 1-5,10-16 | F 16 J 15/52 <br> F 16 J 3/04 <br> F 16 K 41/10 |
| X | GB-A-1 208 819 (BASFORD) <br> * le document en entier * <br> – – – | 1-3,5, 12-16 | |
| X | GB-A-2 046 373 (KLEIN, SCHANZLIN & BECKER) <br> * abrégé; figures * <br> – – – | 1-3,11, 14-16 | |
| A | DE-A-1 475 845 (SEALOL CORP.) <br> * page 10, lignes 10 - 7; figures 3-4, 6, 8 * <br> – – – | 6-9 | |
| A | GB-A-2 146 713 (MITSUBISHI) <br> * figures 3-4 * <br> – – – – – | 6 | |

**DOMAINES TECHNIQUES RECHERCHES (Int. Cl.5)**

F 16 J
F 16 K

**Le présent rapport de recherche a été établi pour toutes les revendications**

| Lieu de la recherche | Date d'achèvement de la recherche | Examinateur |
|---|---|---|
| La Haye | 14 mars 91 | NARMINIO A. |